# EUROPEAN PATENT SPECIFICATION

(11) **EP 2 412 425 B1**
(45) Date of publication and mention of the grant of the patent: **17.02.2016**
(21) Application number: 11175659.9
(22) Date of filing: 27.07.2011
(51) Int. Cl.: B01D 53/14, B01D 53/62, B01D 53/96

(54) **CARBON DIOXIDE CAPTURE SYSTEM AND METHOD OF CAPTURING CARBON DIOXIDE**
KOHLENDIOXIDABSCHEIDUNGSSYSTEM UND VERFAHREN ZUR KOHLENDIOXIDABSCHEIDUNG
SYSTÈME DE CAPTURE DE DIOXYDE DE CARBONE ET PROCÉDÉ DE CAPTURE DE DIOXYDE DE CARBONE

(30) Priority: 30.07.2010 US 847586
(43) Date of publication of application: 01.02.2012
(73) Proprietor: General Electric Company, Schenectady, NY 12345 (US)
(72) Inventor: Westendorf, Tiffany Elizabeth Pinard, Niskayuna, NY 12309 (US); Genovese, Sarah Elizabeth, Niskayuna, NY 12309 (US)
(74) Representative: Illingworth-Law, William Illingworth

(56) References cited:
- WO-A1-03/095071
- WO-A1-2008/072979
- WO-A1-2009/153351
- US-A- 4 406 867
- US-A1- 2009 291 874

## Description

### BACKGROUND

This disclosure generally relates to systems and processes for capturing carbon dioxide (CO₂) from gas streams, and more particularly to a solids delivery system to handle solid material containing the captured CO₂.

The emission of carbon dioxide into the atmosphere from industrial sources such as power plants is now considered to be a principal cause of the "greenhouse effect", which contributes to global warming. In response, efforts are underway to reduce emissions of CO₂. Many different processes have been developed to attempt to accomplish this task. Examples include polymer and inorganic membrane permeation; removal of CO₂ by adsorbents such as molecular sieves; cryogenic separation; and scrubbing with a solvent that is chemically reactive with CO₂, or which has a physical affinity for the gas.

One technique has received much attention for removing CO₂ from flue gas streams, e.g., exhaust gas produced at power plants. In this technique, aqueous monoethanolamine (MEA) or hindered amines like methyldiethanolamine (MDEA) and 2-amino-2-methyl-1-propanol (AMP) are employed as the solvents in a sorption/ stripping type of regenerative process. The technique has been demonstrated commercially, using pilot plant and/or slipstream units, for CO₂ capture from coal-fired power plants and gas turbines. Commercial CO₂ capture has been practiced in gas sweetening processes for chemical production and in the food and beverage industry.

There are certainly considerable advantages inherent in the MEA and hindered amine-based absorption processes. However, a number of deficiencies may be preventing wider adoption of this type of technology. For example, the process can sometimes result in sharp increases in the viscosity of the liquid absorbent, which can decrease the mass transfer of CO₂ into the sorbent. To avoid this problem, the concentration of MEA and other amines is sometimes maintained at a relatively low level, e.g., below about 30 wt% in water in the case of MEA. However, the lower concentrations can greatly reduce absorbing capacity, as compared to the theoretical capacity of the neat absorbent.

Moreover, energy consumption in the MEA process can be quite high, due in large part to the need for solvent (e.g., water) heating and evaporation. For example, the process may consume about 10-30% of the steam generated in a boiler that is heated by combustion of a fossil fuel. Furthermore, MEA-based sorption systems may not have the long-term thermal stability, in the presence of oxygen, in environments where regeneration temperatures typically reach at least about 120°C.

Additional drawbacks may result from the fact that the liquid absorbent which is enriched with CO₂ in the MEA or hindered amine process may still contain a substantial amount of free amine and solvent (usually water). The amine and water can be evaporated under typical operating conditions, and can cause corrosion and other degradation in the attendant equipment. To address this concern, specialized, corrosion-resistant materials can be used for the equipment, but this can in turn increase capital costs for the plant. In some cases, corrosion inhibitors can be added, but the use of these specialized additives can also increase operational costs.

Another example of a commercial CO₂ post-combustion capture process uses aqueous solutions of piperazine-promoted potassium carbonate (K₂CO₃). However, this process is often very energy-intensive, and can be economically inferior to the MEA process. Still another example involves the use of chilled ammonia. In this case, energy-intensive cooling systems are usually required for such a system, and the risks associated with unintended ammonia release may be unacceptable.

Therefore, there remains a need for systems that efficiently and effectively remove carbon dioxide from a gaseous stream.

WO 2009/153351 discloses a process for the removal of CO₂ from a gas comprising the steps of: (a) contacting the gas in an absorber with an aqueous solution of one or more carbonate compounds in the presence of an accelerator, thereby reacting at least part of the CO₂ to form a bicarbonate compound, under conditions such that at least a part of the bicarbonate compound formed precipitates forming a bicarbonate slurry; (b) subject at least part of the bicarbonate slurry to a concentration step to obtain an aqueous solution and a concentrated bicarbonate slurry wherein the concentrated bicarbonate slurry comprises from 20 to 80 wt% of bicarbonate compounds; (c) returning at least part of the aqueous solution to the asbsorber; (d) pressurising the concentrated bicarbonate slurry; (e) transferring the pressurised concentrated bicarbonate slurry to a regenerator and applying heat to obtain a CO₂ -rich gas stream and a regenerated carbonate stream.

WO 2008/072979 discloses a method for capturing CO₂ from exhaust gas in an absorber, wherein the CO₂ containing gas is passed through an aqueous absorbent slurry wherein said aqueous absorbent slurry comprises an inorganic alkali carbonate, bicarbonate and at least one of an absorption promoter and a catalyst, and wherein the CO₂ is converted to solids by precipitation in the absorber, said slurry having the precipitated solids is conveyed to a separating device, in which the solids are separated off, essentially all of at least one of the absorption promoter and catalyst is recycled together with the remaining aqueous phase to the absorber.

US 2009/0291874 discloses compositions comprising ionic liquids and an amine compound, and methods for using and producing the same. The compositions disclosed are useful in reducing the amount of gaseous impurities such as CO₂ in a fluid medium.

### SUMMARY

Disclosed herein is a carbon dioxide capture system and methods for using the same.

According to the present invention, there is provided a system for recovering carbon dioxide from a gas stream, comprising: a reaction chamber having a first pressure and comprising a gas stream inlet; a phase-changing liquid sorbent, wherein the liquid sorbent is a pure component and is chemically reactive with carbon dioxide to form a solid material; a regeneration unit to decompose the solid material to release carbon dioxide gas and regenerated liquid sorbent; and a transport mechanism disposed between the reaction chamber and the regeneration unit and configured to receive the solid material after the solid material formed and mix the solid material with a liquid to form a slurry, pressurize the slurry, and transport the slurry to the regeneration unit.

The invention further provides a method of recovering carbon dioxide from a gas stream, comprising: chemically reacting carbon dioxide with a phase-changing liquid sorbent to form a solid material, the liquid sorbent being a pure component; after forming the solid material, mixing the solid material with a liquid to form a slurry; pressurizing and transporting the slurry to a regeneration unit; and heating the slurry to form carbon dioxide gas and regenerated liquid sorbent.

The foregoing and other features of the present system and method will be further understood with reference to the drawings and detailed description.

### DESCRIPTION OF THE FIGURES

Referring now to the figures, which are exemplary embodiments and wherein like elements are numbered alike:
FIG. 1 is a schematic of an exemplary system for recovering CO₂ from a gas stream;
FIG. 2 is a schematic of an exemplary embodiment of a transport mechanism, including a slurry pump for use in the system of FIG. 1; and
FIG. 3 is a schematic of the exemplary system of FIG. 1 including an optional cyclone for separating the scrubbed gas stream from the solid particles.

### DETAILED DESCRIPTION

Disclosed herein are systems and processes for capturing carbon dioxide (CO₂) from gas streams, and more particularly to a solids delivery system to handle solid material containing the captured CO₂. In capturing the CO₂ from the gas stream, the system advantageously combines the use of a liquid sorbent that forms a solid in the presence of CO₂ and a transport mechanism configured to form a slurry with the solid material, pressurize the slurry, and deliver the slurry to a desorption unit or other downstream unit operation. As will be described in detail below, the liquid sorbent employed in the system is a pure component. In other words, the liquid sorbent does not require the use of a co-solvent or other carrier fluid to be used in the CO₂ capture system. Current systems utilize liquid sorbents mixed with a carrier fluid (e.g., aqueous systems, such as ammonia and water or glycol, and the like). These co-solvents or carrier fluids do not absorb CO₂ and they add a large volume of material, which results in low net CO₂ loading by volume. Not only must the system be designed to accommodate this large volume (increasing capital cost), but additional energy is required to pump it, heat it, cool it, and the like (increasing operating cost). By eliminating the need for a co-solvent or carrier fluid, the energy used to pump the converted sorbent and CO₂ through the system, as well as heating and cooling the material, is saved. Moreover, by not diluting the sorbent, a step in the process and the system equipment associated therewith is eliminated. Because of this, desirably, the slurrying liquid agent is unreacted sorbent, to eliminate the need to separate the liquid slurrying agent from the regenerated liquid sorbent and CO₂ gas in the desorption unit, and to avoid diluting the pure liquid sorbent.

Carbon dioxide is present in a wide variety of gas streams that can be treated with the systems described herein. Non-limiting examples include gas streams originating from a combustion process; a gasification process; a landfill; a furnace (e.g., blast furnace or chemical reduction furnace); a steam generator; a boiler; and combinations comprising at least one of the foregoing. In one embodiment, the CO₂ gas stream is a flue stream originating in a coal-fired plant (e.g., power plant).

The system utilizes a liquid sorbent that chemically reacts with carbon dioxide present in the treatment stream (i.e., the stream to be treated) to form a new molecule that is a solid at the temperature and pressure of the reaction chamber. In the regeneration unit, release of the carbon dioxide and regeneration of the liquid sorbent can be performed under increased pressure (e.g., pressures in the range of 1.1-30 bars). The carbon dioxide stream is suitable for sequestration and/or other further processing. Also optionally, the liquid sorbent can be recycled to the reaction chamber.

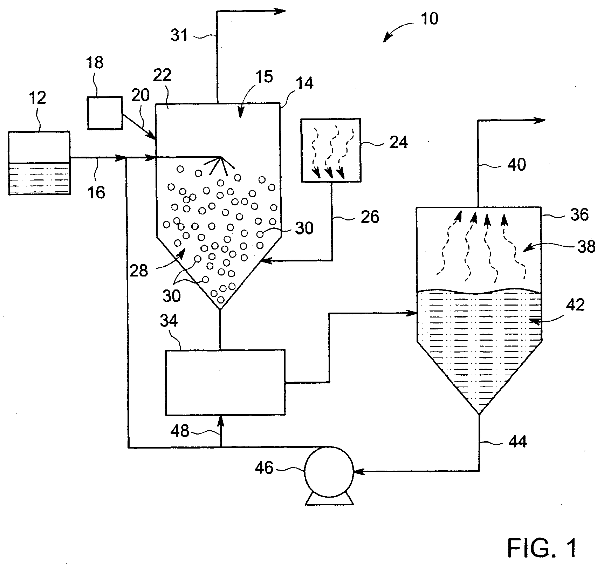

FIG. 1 is a schematic illustration of a system 10 configured to remove CO₂ from a gas stream. The liquid sorbent 12 is fed to a reaction chamber 14 (e.g., absorber) via a conduit 16. In another embodiment, the liquid sorbent 12 can be fed to the reaction chamber 14 via a plurality of conduits to a plurality of locations within the reaction chamber 14. In the embodiment illustrated in FIG. 1, the supply point for the liquid sorbent 12 is located in an upper region 15 of reaction chamber 14, e.g., to provide sufficient contact time with the CO₂. The reaction chamber 14 is configured to provide contact of the liquid sorbent 12 with gas stream 24 (e.g. flue gas stream) such that reaction of the liquid sorbent with the CO₂ can occur.

The reaction of the liquid sorbent can be carried out in any large-scale chamber or enclosure that can be operated under the reaction conditions (e.g., temperature and pressure), and that enables the desired residence time. For example, the reaction chamber can be designed to allow for sufficient contact between the gas stream and the liquid sorbent, e.g., to maximize the reaction between the liquid sorbent and the CO₂. Exemplary reaction chambers for use in the system 10 can include, without limitation, a sorption tower, a wetted wall tower, a spray tower, a venturi scrubber, optionally equipped with an entrainment separator, and combinations of thereof. Moreover, while a vertical chamber is depicted in FIG. 1, it is to be understood that a horizontally-oriented chamber might alternatively be used.

For example, a venturi scrubber typically includes multiple sections, e.g., a converging section, a throat section, and a diverging section. An inlet gas stream can enter the converging section, and as the area decreases, gas velocity increases. Liquids are usually introduced at the throat, or at the entrance to the converging section. In a typical scenario, the gas stream is forced to move at very high velocities in the small throat section, shearing the liquid matter from the vessel walls. This action can produce a large number of very tiny droplets, which can react with the gas stream.

In various embodiments, an atomizer 18 (e.g. orifice(s), spray nozzle(s), or the like) is disposed in fluid communication with the reaction chamber (e.g., located within the spray tower as illustrated in FIG. 1) to disperse the liquid sorbent 12 into droplets. For example, an atomizing gas (e.g., air) can be supplied from a nozzle tube 20 into the interior 22 of the reaction chamber 14. Alternatively, or in addition, the atomizer 18 can be designed to atomize the liquid sorbent due to the pressure of the reaction chamber and the size of the inlet from the atomizer 18 into the reaction chamber 14. The atomizer can be located near the exit of conduit 16 into the reaction chamber. In some embodiments; many nozzles may be placed across the tower at different heights, to maximize the number of the sorbent droplets, and/or the atomizer 18 can be incorporated into a portion of the conduit 16.

The selected size for the droplets of liquid sorbent will depend on various factors, such as the composition of the sorbent (e.g., the reactivity of the sorbent with CO₂ gas); and the type and design of the reaction chamber. The droplet size is a balance between maximizing the surface area for contact with the CO₂, and providing a sufficient mass for solid particle formation and preventing formed solid particles from being carried out of the reaction chamber in the gas stream. In an exemplary embodiment, such as when using a phase-changing sorbent in the reaction chamber 14, the average diameter of the droplets can be less than or equal to 1,000 micrometers (µm). In another embodiment, for example when a venturi scrubber is used as the reaction chamber 14, the average diameter of the droplets can be 10 µm to 100 µm.

The gas stream 24 can be directed into reaction chamber 14 via conduit 26. In the embodiment illustrated by FIG. 1, the gas stream 24 is directed into a lower region 28 of the reaction chamber 14, relative to upper region 15. In this manner, an induced countercurrent flow exposes the gas stream, when it has the lowest CO₂ concentration, to the freshest liquid sorbent. At the same time, the gas stream with the highest CO₂ concentration is exposed to the most "converted" sorbent. This type of flow scheme can permit the resulting solid material to agglomerate more readily, leading to faster solidification.

The flow rate of the flue gas entering the reaction chamber is chosen to enable the desired CO₂ removal, e.g. to provide the residence time to reduce the CO₂ level in the gas stream to an acceptable level (e.g., less than or equal to 1.9 volume percent (vol%)). The inlet pressure will depend on the design and operating conditions of the reaction chamber as well as the type of atomizer. For example, the pressure drop for the gas stream entering the reaction chamber can be relatively small in the case of a spray tower (e.g., on the order of inches of water), but may be larger for other types of reaction chambers.

The operating conditions of the reaction chamber are dependent upon the specific liquid sorbent utilized. Typical operating conditions for the absorber are 20-70°C (specifically, 30-60°C, more specifically, 40-55°C) at near-atmospheric pressure. Other factors affecting absorption performance include humidity, trace contaminants present in the flue gas, and the like.

As mentioned previously, the chemical reaction between the CO₂ in the gas stream and the liquid sorbent droplets results in the formation of solid particles 30. The size, shape, and density of the particles depend on various factors, such as the size of the initial droplets; the content of the liquid sorbent; the residence time within the reaction chamber; and the gas flow rate. Desirably, the particles 30 should be small enough to solidify to at least a non-sticky surface texture, but large enough to provide a sufficient mass for effective transport out of the reaction chamber 14. Generally, the solid material 30 is in the form of particles, e.g., spherical or substantially spherical in shape. The average particle density can vary significantly, but in an exemplary embodiment is in the range of about 1.1 grams per cubic centimeter (g/cc) to about 1.5 g/cc. The size of the particles can vary, e.g., depending on the initial spray technique used. Exemplary average particles sizes are similar to those of the droplets, less than or equal to 1,000 µm (not accounting for any agglomeration of individual particles).

Formation of the solid material 30 removes a substantial amount of CO₂ from the gas stream, e.g., in some embodiments, greater than or equal to 50% by volume (vol%); specifically greater than or equal to 70 vol%. The remaining CO₂-lean flue gas can then be released as an outlet gas, via conduit 31. Alternatively, the lean gas stream can be directed to another reaction vessel for additional treatment or use. The solid material 30 is then transported to a desorption site.

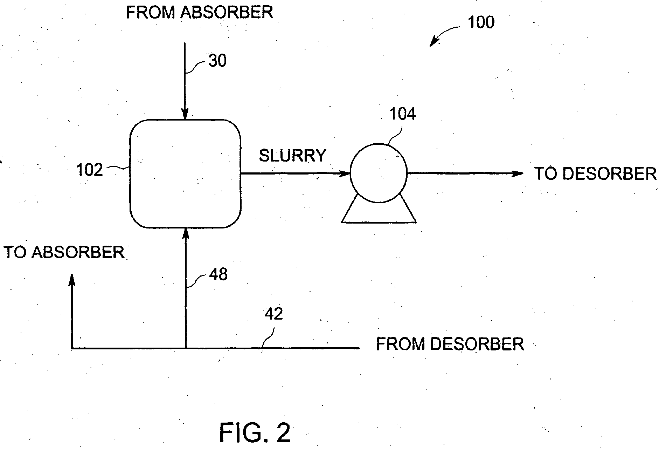

The solid particles 30 are transported to a regeneration unit (e.g., a desorber) by a transport mechanism 34 configured to pressurize and transport the solid particles to the regeneration unit 36. FIG. 2 is a schematic illustration of an exemplary embodiment of a transport mechanism for use in system 10. The transport mechanism 100 comprises a slurry tank 102 in fluid communication with a slurry pump 104. The slurry tank 102 is configured to receive the solid particles 30. The solid particles 30 can be fed into the slurry tank 102 by various methods such as a gravity feed, a screw auger, or other feed mechanisms, as well as combinations comprising at least one of these transportation mechanisms. In one embodiment, the solid particles 30 are transferred (at atmospheric pressure) from the reaction chamber 14 to the slurry tank 102, which is also at atmospheric pressure. Exemplary slurry tanks can be a standard vessel configured to receive both the solid particles 30 and a carrier fluid, such as without limitation, a hopper, continuous stirred tank reactor (CSTR), and so forth. The slurry tank 102 can optionally include a mixer (e.g., static mixer).

In some embodiments, the slurry is formed in the slurry tank 102 by the addition of liquid sorbent (e.g., recycled liquid sorbent from the regeneration unit 36). Therefore, in an exemplary embodiment, a slipstream 48 of regenerated sorbent recycle flow can be directed to slurry tank 102 to form the slurry with the solid material 30. In other words, after phase change of the liquid sorbent to the solid material, the solid particles 30 are fed to the slurry tank 102 where they are slurried (e.g., with a carrier liquid). For efficiency, the carrier liquid can be the liquid sorbent, e.g., the regenerated liquid sorbent and/or fresh liquid sorbent. Desirably, the loading of solids in the slurry is determined based on the particle size, slurryability, and slurry viscosity, such that the slurry solids content is maximized, but the slurry is pumpable and the solids do not settle out of suspension in the process. Hence, the regeneration unit (e.g., regenerated liquid sorbent outlet) may be in operable communication with the transportation mechanism (e.g., liquid inlet) in order to allow regenerated liquid sorbent to be introduced to the transportation mechanism.

Once the liquid has been mixed with the solid material to form the slurry, the slurried solids can then be pressurized in a slurry pump 104 that delivers the slurry, under pressure, to the pressurized regeneration unit 36. By delivering the slurry solids under pressure, the compression duty needed to release the CO₂ in the regeneration unit 36 can be reduced. The pressure of the slurry should be suitable for injection into the pressurized desorber (i.e., should be greater than the desorption pressure), but should not be pressurized in great excess of the desorption pressure to avoid needless energy use. Any slurry pump capable of delivering the slurry solids under the desired pressure to the regeneration unit can be used in the system 10. Slurry pumps effective for use as described herein will be well known to those having skill in the art and are commercially available.

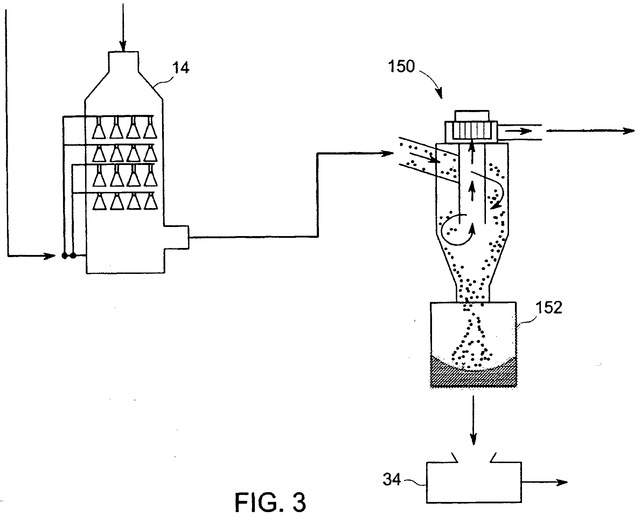

The system 10 can further include an optional cyclone 150, as shown in FIG. 3. The cyclone 150 can be disposed between the reaction chamber 14 and the transport mechanism 34. The cyclone 150 is configured to separate the solid particles 30 from the "scrubbed" gas stream (i.e., the gas stream from which the CO₂ has been removed to the desired level (e.g., that is substantially free of CO₂)). The solid particles 30 fall to the bottom of the cyclone 150 where the material can empty into the transport mechanism 34, for example, via a hopper 152. The hopper 152 can then feed the inlet of the transport mechanism 34.

The solid particles 30, now pressurized by the transport mechanism 34, are directed to the regeneration unit 36. The regeneration unit 36 is configured to desorb the CO₂ from the particles 30 (e.g., at an increased pressure, such as greater than atmospheric pressure, specifically, greater than or equal to 2 atm, more specifically, 10 to 20 atm,), releasing CO₂ gas and regenerating the liquid sorbent. Since the transport mechanism pressurizes the solid particles 30 prior to delivery into the regeneration unit 36, the compression duty needed for sequestration of the CO₂ is reduced compared to a system that desorbs CO₂ at near-atmospheric pressure (e.g., a MEA-based system). The regeneration unit 36 can be any type of desorption unit used to separate volatile compounds from solid particles. In general, regeneration unit 36 is a vessel or chamber, which can provide varying heat and pressure conditions to liberate the CO₂ from the solid particles 30. The regeneration unit 36 can also include liberating gas collector e.g., liquid or solid particles. Exemplary regeneration unit for use in the system 10 can include, without limitation, continuous stirred tank reactors (CSTR), and other like desorption vessels.

Desorption units are described in a number of references. One non-limiting example is the publication "Remediation Technology Health and Safety Hazards: Thermal Desorption", circulated by the Occupational Safety & Health Administration (OSHA); SHIB 02-03-03 (http://www.osha.gov/dts/shib/shib_02_03_03_tsds9.pdf). Many of the units are referred to as "thermal desorption units", which are designed to operate at relatively low temperatures, e.g., about 200°F to 600°F (93°C-316°C); or relatively high temperatures, e.g., about 600°F to 1,000°F (316°C-538°C):

In terms of applied temperature, thermal desorption units are often grouped into three process types: directly-heated units, indirectly-heated units; and in-situ units, as described in the OSHA, reference. Moreover, the configuration of the unit can vary, e.g., depending on what type of solid material is being treated; and what temperature is required. In some instances, the regeneration unit can be operated under a vacuum or very low pressure conditions; and/or low-oxygen conditions, e.g., to lower the heat requirements needed for desorption.

Generally, desorption of the solid particles 30 can be carried out by heating the particles. As alluded to previously, the heat-treatment regimen will depend on the composition and size of the solid particles; the amount of CO₂ bound within the particles; and pressure conditions within regeneration unit 36. Desirably, the temperature is high enough to release as much CO₂ as possible from the solid particles. Typically the temperature is greater than or equal to the decomposition temperature of the particles. However, the temperature should not be excessively high, i.e., requiring excessive energy use; or possibly resulting in decomposition of the sorbent to byproducts which may be difficult to handle in the overall process. Generally, the sorbent can be regenerated (e.g. the CO₂ can be released from the solid material while the solid material converts back to the liquid sorbent) under pressures of greater than or equal to 1 atm specifically, greater than or equal to 2 atm, and more specifically, 10 to 20 atm. Desorption temperatures should be greater than 70°C and less than the decomposition temperature of the liquid sorbent. For example, in most embodiments where the solid particles are carbamates, bicarbonates, or related compositions, the desorption temperature will be about 80°C to about 150°C. In some embodiments, the internal pressure in the chamber of the regeneration unit 36 can be decreased, to accelerate the desorption process. Optionally, the pressure can be less than 1 atm.

Referring back to FIG. 1, the substantially pure CO₂ gas 38 is released or otherwise directed out of regeneration unit 36 by the conduit 40 (or multiple conduits). In an exemplary embodiment, the CO₂ gas is compressed and/or purified, e.g., for re-use, or for transport to a location.

The desorption step also functions to regenerate a substantial amount of the liquid sorbent 42. In some embodiments, the liquid sorbent can be directed to treatment, storage, or disposal facilities. However, in an exemplary embodiment, liquid sorbent 42 is directed back to reaction chamber 14, through one or more conduits 44. Further, and as mentioned above, a slipstream 48 of the regenerated sorbent can be split off from the recycle stream of liquid sorbent 42 and directed to the transport mechanism 34, specifically the slurry tank 102 therein to effect a slurry with the solid particles 30. One or more pumps 46 can be used to pump the sorbent back to the reaction chamber and/or the transport mechanism 34.

However, other techniques for moving the sorbent through appropriate piping can be envisioned by those skilled in the art. The regenerated liquid sorbent 42 can be added by itself to the reaction chamber 14, to react with additional CO₂ from the gas stream, thereby forming more CO₂-bound solid material in a closed loop process. The regenerated liquid sorbent could also be combined with "fresh" liquid sorbent 12, or could be added to the reaction chamber 14 as a separate feed, along with sorbent 12.

In some embodiments, the liquid sorbent can have a relatively low vapor pressure, (e.g., less than or equal to 0.2 mm Hg @ 20°C). In other embodiments, the liquid sorbent can have a relatively high vapor pressure, and can be volatile under typical atmospheric conditions. In such embodiments, small droplets of regenerated sorbent may be carried out of the absorption and/or desorption vessel(s) with the gas flow. It may be desirable, therefore, in such embodiments, to include at least one condensation step in the process. In this manner, additional sorbent may be recovered from the CO₂-rich gas stream, which results after decomposition of the solid CO₂-rich material, or from the CO₂-lean gas stream, which results after absorption of CO₂ from the raw flue gas. The condenser may be outfitted with any type of coolant system or device, e.g., cooling tubes or jackets which utilize a variety of coolant fluids, such as water. Passage of the lean gas stream through the condenser serves to liquefy the residual sorbent, while also coalescing any small liquid droplets. The collected sorbent can then be directed, for example, to a storage vessel or recycled to the absorption vessel.

As mentioned above, a variety of liquid sorbents can be chemically reacted with the carbon dioxide. In general, any liquid CO₂ sorbent that can be converted to a solid by chemical reaction with carbon dioxide can be used to carry out the process described herein. Some materials (e.g., CO₂ hydrates and clathrates) have molecules that align in a cage structure to enclose the carbon dioxide, e.g., they rely solely upon an assembly of molecules and do not rely upon chemical reaction. The present liquid sorbent, however, is a phase-changing material that relies upon chemical reaction, and optionally physisorption, to remove the carbon dioxide, thereby forming a new molecule (e.g., forming new bonds). Some exemplary liquid sorbents are described in the following references: "Reversible Gelation of Polyethyleneimide Solutions Using CO2", Kitchens et al, AIChE Annual Meeting, San Francisco, CA, 2006 (p. 520f of proceedings); and "Reversible, Room-Temperature Chiral Ionic Liquids. Amidinium Carbamates Derived From Amidines And Aliphatic Primary Amines With Carbon Dioxide", Yamada et al, Chem. Mater., 19, (5), 967-969 (2007). The present phase-changing liquid sorbent is a pure component (e.g., has no non-absorbing carrier or solvent). The sorbent can also rely upon a temperature swing process to facilitate the sorption and desorption of the CO₂.

In one embodiment, the liquid sorbent comprises an amine material. Various amine compounds (the term as used herein includes polymeric materials as well) can be used in the liquid sorbent. Many amines fall into the following classes: aliphatic primary and secondary amines, and polyamines; polyimines (e.g., polyalkyleneimines); cyclic amines, amidine compounds; hindered amines; amino-siloxane compounds; amino acids. Non-limiting examples of these materials are noted below.

Exemplary aliphatic amines and polyamines include, without limitation, cyclohexyl amine, ethylenediamine, diethylenetriamine, triethylenetetramine, tetraethylenepentamine, 1,4-diaminobutane, 1,6-diaminohexane, 1,8-diaminooctane, and the like. Moreover, materials such as substituted amines, for example alkanolamines, may also be used.

Exemplary polyimines include, without limitation, polyalkyleneimines. These materials can be obtained by the polymerization of one or more alkyleneimines, such as ethyleneimine, propyleneimine, and 1,2-butyleneimine. In one embodiment, the polyimine is polyethylenimine.

Exemplary cyclic amines include, without limitation, piperidine, piperazine and pyridine-based compounds, such as 4-aminopyridine and morpholine. Various bicyclic compounds can also be used, such as 1,5-diazabiciclo[4.3.0]non-5-ene (DBN) or 1,8-diazabiciclo[5.4.0]undec-7ene (DBU).

A number of amidine and guanidine compounds may also be used. Most of amidines conform to the general structure:

RC(=NR)NR₂,

wherein each R group, individually, can be hydrogen or a lower alkyl group. Many of the amidine compounds are considered to be oxoacid derivatives (when the parent oxoacid is a carboxylic acid, the resulting amidine is a carboxamidine). Some of the exemplary amidine compounds are described in U.S. Patents 4,162,280 (Kranz) and 4,129,739 (Tracy et al). A non-limiting example of the amidines can include, without limitation, formamidine (HC(=NH)NH₂).

Guanidines are a group of organic compounds with the general structure (R₁R₂N)(R₃R₄N)ON-R₅, wherein each "R" group can independently be hydrogen or an alkyl group. Non-limiting examples of the guanidines include 1,1,3,3-tetramethylguanidine ((Me₂)N)₂C=NH).

Hindered amine compounds, which may be used as the liquid sorbent, are also known in the art. Some of examples of these compounds are described in U.S. Patent 4,405,579 (Sartori et al) and 6,117,995 (Zedda et al), as well as EP Application 0588175B1 (Yoshida et al). Exemplary hindered amine compounds include, without limitation, polyalkyl-substituted piperidine derivatives, such as 2,2,6,6tetramethyl piperidine. Other examples include, without limitation, 2,2,6,6-tetramethyl piperidine; tertbutylamine; cyclohexyldiamine; 2-(dimethylamino)-ethanol; 2-(diethylamino)-ethanol; 2(ethylmethylamino)-ethanol; 1-(dimethylamino)-ethanol; 1-(diethylamino)-ethanol; 1(ethylmethylamino)-ethanol; 2-(diisopropylamino)-ethanol; 1-(diethylamino)-2-propanol; 3-(diethylamino)-1-propanol.

Various examples of amino-siloxane compositions are described in U.S. Patents 5,939,574 (Schilling, Jr., et al) and 4,487,883 (Homan). Those skilled in the art will be able to determine which particular amino-siloxanes are capable of reacting with gaseous CO₂ to form the solid material, as described herein. Some of the amino-siloxanes which may be used are described in a pending U.S. Patent Application for Perry et al; U.S. Application Serial Number 12/512,105, filed on July 30, 2009 (Publication No. 2010/0158777 A1). A variety of amino-siloxanes are described in the referenced disclosure. Exemplary amino-siloxanes can include compositions which comprise chemical structure (I): 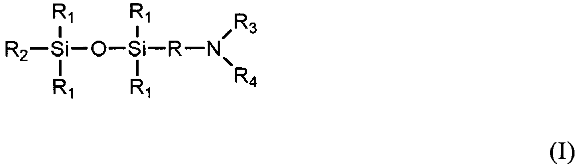 wherein R is a C₁-C₆ alkyl group, which can be linear or branched; and which can contain at least one hydroxy group; R₁ is independently at each occurrence C₁-C₈ alkyl or aryl; R₂ is R₁ or RNR₃R₄, wherein R₃ and R₄ are independently a bond, hydrogen, or C₁-C₈ alkyl (linear or branched).

One specific, illustrative example of an amino-siloxane compound is provided below as compound (Ia), wherein "Me" is a methyl group:

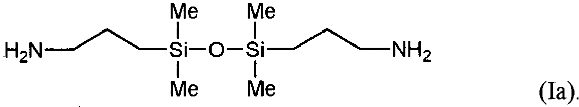

The Perry et al Application describes methods for preparing various amino-siloxane compounds as well.

The identity of the solid particulate which is formed by reaction of the liquid sorbent with the CO₂ will depend in large part on the specific liquid sorbent that is used. In the case of amine sorbents, the solid particulate will depend on the identity of the amine. In many instances, the solid particulate comprises a carbamate, a bicarbonate compound, or a combination comprising at least one of the foregoing. Carbamate is the preferred material according to current knowledge.

During use, a gas stream and a phase-changing liquid sorbent can be introduced to the reaction chamber. Within the reaction chamber, CO₂ in the gas stream and the liquid sorbent can chemically react to form a solid material and a lean gas stream (e.g., at a temperature of 20°C to 80°C). The lean gas stream from the reaction chamber can optionally be directed to a separator (e.g., cyclone) that separates the solid material from the lean gas stream. The solid material can be combined with a carrier fluid (e.g., liquid sorbent such as recycled liquid sorbent), pressurized, and transported to the regeneration unit. Within the regeneration unit, the temperature of the solid material is adjusted (e.g., to 80 to 200°C) to decompose the solid material to the CO₂ and the liquid sorbent. The liquid sorbent can optionally be recycled to the absorption chamber.

The transport mechanisms described above can advantageously be used with the liquid CO₂ sorbents provided herein to effectively capture CO₂ for recycle in a manner that is more cost effective than current methods. Energy can be saved by using the liquid sorbent to form the slurried solid material, thereby not having to pump, heat, or cool the larger volumes of fluid used by systems employing wholly liquid sorbents (i.e., non-phase changing sorbent) and/or that require non-absorbing co-solvents or carrier fluids different from the sorbent. Moreover, when the slipstream of regenerated liquid sorbent is used to form the slurry solids, no additional liquids are required in the system at all. This reduces materials and capital cost (e.g., less storage tanks, and the like), increases efficiency, simplifies the CO₂ capture process, and reduces the volume/size/footprint of the system. As such, a method of reducing the carbon dioxide in a process stream is provided and comprises contacting the process stream with the liquid carbon dioxide sorbents described herein. The process stream so treated may be any wherein the level of CO₂ therein is desirably reduced, and in many processes, CO₂ is desirably reduced at least in the exhaust streams produced thereby. The process stream is typically gaseous but may contain solid or liquid particulates, and may be at a wide range of temperatures and pressures depending on the application. The solid particulates formed by the reaction of the liquid adsorbent with the carbon dioxide is formed into a slurry and pressurized before being fed to a desorption site. The pressurized slurry then undergoes desorption to regenerate the liquid sorbent and separate the CO₂ gas.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

1. A system (10) for recovering carbon dioxide from a gas stream (24), comprising:
a reaction chamber (14) having a first pressure and comprising a gas stream inlet;
a phase-changing liquid sorbent (12), wherein the liquid sorbent (12) is a pure component and is chemically reactive with carbon dioxide to form a solid material;
a regeneration unit (36) to decompose the solid material to release carbon dioxide gas and regenerated liquid sorbent (42); and
a transport mechanism (100) disposed between the reaction chamber (14) and the regeneration unit (36) and configured to receive the solid material after the solid material formed and mix the solid material with a liquid to form a slurry, pressurize the slurry, and transport the slurry to the regeneration unit (36).

2. The system of Claim 1, wherein a regenerated liquid sorbent outlet from the regeneration unit (36) is in operable communication with a liquid inlet of the transportation mechanism such that the regenerated liquid sorbent (42) can be mixed with the solid material to form the slurry.

3. The system of Claim 1 or Claim 2, wherein the transport mechanism (100) comprises a slurry tank (102) in fluid communication with a slurry pump (104), and wherein the solid material and the liquid are mixed in the slurry tank (102) to form the slurry and the slurry pump (104) is configured to pressurize the slurry and transport it to the regeneration unit (36).

4. The system of any preceding Claim, wherein the liquid is a slipstream (48) of the regenerated liquid sorbent (42).

5. The system of any preceding Claim, wherein the liquid sorbent (12) is an amine compound.

6. The system of Claim 5, wherein the amine compound is a polyimine, polyamine, cyclic amine, guanidine, amidine, hindered amine, amino acid, an amino-siloxane compound.

7. The system of Claim 5, wherein the amine compound is a polyethyleneimine.

8. The system of Claim 5, wherein the amine compound is 4-aminopyridine, 1,5-diazabiciclo[4.3.0]non-5-ene (DBN), 1,8diazabiciclo[5.4.0]undec-7-ene (DBU).

9. The system of Claim 5, wherein the amine compound is formamidine (HC(=NH)NH₂).

10. The system of Claim 5, wherein the amine compound is 2,2,6,6-tetramethyl piperidine, tert-butylamine, cyclohexyldiamine, 2-(dimethylamino)-ethanol, 2-(diethylamino)-ethanol, 2-(ethylmethylamino)-ethanol, 1 (dimethylamino)-ethanol, 1-(diethylamino)-ethanol, 1-(ethylmethylamino)-ethanol, 2(diisopropylamino)-ethanol, 1-(diethylamino)-2-propanol, 3-(diethylamino)-1-propanol.

11. The system of Claim 5, wherein the amine compound is (NH₂C₃H₆Si(Me)₂OSiMe₂C₃H₆NH₂), wherein "Me" is a methyl group.

12. A method of recovering carbon dioxide from a gas stream (24), comprising:
chemically reacting carbon dioxide with a phase-changing liquid sorbent (12) to form a solid material, the liquid sorbent being a pure component;
after forming the solid material, mixing the solid material with a liquid to form a slurry;
pressurizing and transporting the slurry to a regeneration unit (36); and
heating the slurry to form carbon dioxide gas and regenerated liquid sorbent (42). 20

13. The method of Claim 12, wherein the slurry is pressurized to a pressure of greater than or equal to 2 atm.

14. The method of Claim 12 or Claim 13, further comprising introducing a slipstream of the regenerated liquid sorbent (48) to the slurry tank (102) for mixing with the solid material.

15. The method of any one of Claims 12 to 14, further comprising atomizing the liquid sorbent (12) before chemically reacting with the carbon dioxide.

## Patentansprüche

1. System (10) für das Gewinnen von Kohlendioxid aus einem Gasstrom (24), umfassend:
eine Reaktionskammer (14), die einen ersten Druck aufweist und einen Gasstromeinlass umfasst;
ein Phasenänderungsflüssigkeits-Sorptionsmittel (12), wobei das Flüssigkeitssorptionsmittel (12) eine reine Komponente und mit dem Kohlendioxid chemisch reaktiv ist, um ein festes Material zu bilden;
eine Regeneriereinheit (36) zum Zersetzen des festen Materials, um Kohlendioxidgas und regeneriertes Flüssigkeitssorptionsmittel (42) freizusetzen; und
einen Transportmechanismus (100), der zwischen der Reaktionskammer (14) und der Regeneriereinheit (36) angeordnet und konfiguriert ist, um das feste Material, nachdem das feste Material gebildet worden ist, aufzunehmen und das feste Material mit einer Flüssigkeit zu mischen, um eine Aufschlämmung zu bilden, die Aufschlämmung unter Druck zu setzen und die Aufschlämmung zur Regeneriereinheit (36) zu transportieren.

2. System nach Anspruch 1, wobei der ein Auslass für regeneriertes Flüssigkeitssorptionsmittel aus der Regeneriereinheit(36)in funktionsfähiger Kommunikation mit einem Flüssigkeitseinlass des Transportmechanismus derart steht, dass das regenerierte Flüssigkeitssorptionsmittel (42) mit dem festen Material gemischt werden kann, um die Aufschlämmung zu bilden.

3. System nach Anspruch 1 oder Anspruch 2, wobei der Transportmechanismus (100) einen Aufschlämmungsbehälter (102) in Fluidkommunikation mit einer Aufschlämmungspumpe (104) umfasst und wobei das feste Material und die Flüssigkeit in dem Aufschlämmungsbehälter (102) gemischt werden, um die Aufschlämmung zu bilden, und die Aufschlämmungspumpe (104) konfiguriert ist, um die Aufschlämmung unter Druck zu setzen und sie zur Regeneriereinheit (36) zu transportieren.

4. System nach einem der vorhergehenden Ansprüche, wobei die Flüssigkeit ein Sog (48) des regenerierten Flüssigkeitssorptionsmittels (42) ist.

5. System nach einem der vorhergehenden Ansprüche, wobei das Flüssigkeitssorptionsmittel (12) eine Aminverbindung ist.

6. System nach Anspruch 5, wobei die Aminverbindung ein Polyimin, Polyamin, cyclisches Amin, Guanidin, Amidin, gehindertes Amin, eine Aminosäure, eine Aminosiloxanverbindung ist.

7. System nach Anspruch 5, wobei die Aminverbindung ein Polyethylenimin ist.

8. System nach Anspruch 5, wobei die Aminverbindung 4-Aminopyridin, 1,5-Diazabicyclo[4,3,0]non-5-en (DBN), 1,8-Diazabicyclo[5,4,0]undec-7-en ist.

9. System nach Anspruch 5, wobei die Aminverbindung Formamidin (HC(=NH)NH₂) ist.

10. System nach Anspruch 5, wobei die Aminverbindung 2,2,6,6-Tetramethylpiperidin, tert-Butylamin, Cyclohexyldiamin, 2-(Dimethylamino)ethanol, 2-(Diethylamino)ethanol, 2-(Ethylmethylamino)ethanol, 1- (Dimethylamino) ethanol, 1-(Diethylamino)ethanol, 1-(Ethylmethylamino)ethanol, 2-(Diisopropylamino)ethanol, 1-(Diethylamino)-2-propanol, 3-(Diethylamino)-1- propanol ist.

11. System nach Anspruch 5, wobei die Aminverbindung (NH₂C₃H₆Si (Me) ₂OSiMe₂C₃H₆NH₂) ist, wobei "Me" eine Methylgruppe ist.

12. Verfahren für das Gewinnen von Kohlendioxid aus einem Gasstrom (24), umfassend:
chemisches Reagieren von Kohlendioxid mit einem Phasenänderungsflüssigkeits-Sorptionsmittel (12), um ein festes Material zu bilden, wobei das Flüssigkeitssorptionsmittel eine reine Komponente ist,
nach Bilden des festen Materials, Mischen des festen Materials mit einer Flüssigkeit, um eine Aufschlämmung zu bilden,
Unterdrucksetzen und Transportieren der Aufschlämmung zu einer Regeneriereinheit (36); und
Erhitzen der Aufschlämmung, um Kohlendioxidgas und regeneriertes Flüssigkeitssorptionsmittel (42) zu bilden.

13. Verfahren nach Anspruch 12, wobei die Aufschlämmung unter einen Druck von mehr als oder gleich 2 atm gesetzt wird.

14. Verfahren nach Anspruch 12 oder Anspruch 13, ferner das Einführen eines Sogs des regenerierten Flüssigkeitssorptionsmittels (48) in den Aufschlämmungsbehälter (102) zum Mischen mit dem festen Material umfassend.

15. Verfahren nach einem der Ansprüche 12 bis 14, ferner das Zerstäuben des Flüssigkeitssorptionsmittels (12) vor dem chemischen Reagieren mit dem Kohlendioxid umfassend.

## Revendications

1. Système (10) pour récupérer du dioxyde de carbone d'un courant de gaz (24), comprenant :
une chambre réactionnelle (14) ayant une première pression et comprenant une entrée de courant de gaz ;
un sorbant liquide à changement de phase (12), dans lequel le sorbant liquide (12) est un composant pur et est chimiquement réactif avec le dioxyde de carbone pour former un matériau solide ;
une unité de régénération (36) pour décomposer le matériau solide afin de libérer le dioxyde de carbone gazeux et le sorbant liquide régénéré (42) ; et
un mécanisme de transport (100) disposé entre la chambre réactionnelle (14) et l'unité de régénération (36) et configuré pour recevoir le matériau solide une fois le matériau solide formé et mélanger le matériau solide à un liquide pour former une suspension, placer sous pression la suspension et transporter la suspension à l'unité de régénération (36).

2. Système selon la revendication 1, dans lequel une sortie de sorbant liquide régénéré de l'unité de régénération (36) est en communication opérationnelle avec une entrée de liquide du mécanisme de transport de sorte que le sorbant liquide régénéré (42) puisse être mélangé au matériau solide pour former la suspension.

3. Système selon la revendication 1 ou la revendication 2, dans lequel le mécanisme de transport (100) comprend un réservoir de suspension (102) en communication fluidique avec une pompe à suspension (104) et dans lequel le matériau solide et le liquide sont mélangés dans le réservoir de suspension (102) pour former la suspension et la pompe à suspension (104) est configurée pour placer sous pression la suspension et la transporter à l'unité de régénération (36).

4. Système selon l'une quelconque des revendications précédentes, dans lequel le liquide est un remous (48) du sorbant liquide régénéré (42).

5. Système selon l'une quelconque des revendications précédentes, dans lequel le sorbant liquide (12) est un composé d'amine.

6. Système selon la revendication 5, dans lequel le composé d'amine est une polyimine, une polyamine, une amine cyclique, une guanidine, une amidine, une amine empêchée, un acide aminé ou un composé d'aminosiloxane.

7. Système selon la revendication 5, dans lequel le composé d'amine est une polyéthylèneimine.

8. Système selon la revendication 5, dans lequel le composé d'amine est la 4-aminopyridine, le 1,5-diazabiciclo[4.3.0]non-5-ène (DBN) ou le 1,8-diazabiciclo[5.4.0]undéc-7-ène (DBU).

9. Système selon la revendication 5, dans lequel le composé d'amine est la formamidine (HC(=NH)NH₂).

10. Système selon la revendication 5, dans lequel le composé d'amine est la 2,2,6,6-tétraméthylpipéridine, la tert-butylamine, la cyclohexyldiamine, le 2-(diméthylamino)éthanol, le 2-(diéthylamino)éthanol, le 2-(éthylméthylamino)-éthanol, le 1-(diméthylamino)éthanol, le 1-(diéthylamino)éthanol, le 1-(éthylméthylamino)-éthanol, le 2-(diisopropylamino)éthanol, le 1-(diéthylamino)-2-propanol ou le 3-(diéthylamino)-1-propanol.

11. Système selon la revendication 5, dans lequel le composé d'amine est le (NH₂C₃H₆Si(Me)₂OSiMe₂C₃H₆NH₂), dans lequel « Me » est un groupement méthyle.

12. Procédé de récupération de dioxyde de carbone d'un courant de gaz (24) comprenant les étapes consistant à :
faire réagir chimiquement le dioxyde de carbone avec un sorbant liquide à changement de phase (12) pour former un matériau solide, le sorbant liquide étant un composé pur ;
après formation du matériau solide, mélanger le matériau solide à un liquide pour former une suspension ;
placer sous pression et transporter la suspension à une unité de régénération (36) ; et
chauffer la suspension pour former du dioxyde de carbone gazeux et du sorbant liquide régénéré (42).

13. Procédé selon la revendication 12, dans lequel la suspension est placée sous une pression supérieure ou égale à 2 atm.

14. Procédé selon la revendication 12 ou la revendication 13, comprenant en outre l'introduction d'un remous du sorbant liquide régénéré (48) dans un réservoir de suspension (102) pour le mélanger au matériau solide.

15. Procédé selon l'une quelconque des revendications 12 à 14, comprenant en outre l'atomisation du sorbant liquide (12) avant réaction chimique avec le dioxyde de carbone.
